# EUROPEAN PATENT APPLICATION

(11) **EP 2 369 402 A1**
(43) Date of publication of application: **28.09.2011**
(21) Application number: 11151807.2
(22) Date of filing: 24.01.2011
(51) Int. Cl.: G02B 27/22, G02C 7/10, H04N 13/00

(54) **3D eyeglasses, method for driving 3D eyeglasses and system for providing 3D image**

(30) Priority: 10.03.2010 KR 20100021338
(71) Applicant: Samsung Electronics Co., Ltd., Suwon-si, Gyeonggi-do 442-742 (KR)
(72) Inventor: Park, Jae-sung, Seoul (KR); Ha, Tae-hyeun, Gyeonggi-do (KR); Kwak, Jong-kil, Gyeonggi-do (KR); Park, Jung-jin, Gyeonggi-do (KR); Choi, Nak-wan, Incheon (KR)
(74) Representative: Clark, David James

(57) **Abstract**

Three-dimensional (3D) eyeglasses, method for driving 3D glasses, and a 3D image providing system are provided. 3D glasses which interwork with the 3D display apparatus according to the present disclosure includes a power unit which supplies power to the 3D eyeglasses; a sensing unit which detects whether or not a user is wearing the 3D eyeglasses; and a controlling unit which controls the power unit to supply power when the sensing unit detects that the user is wearing the 3D eyeglasses.

## Description

### BACKGROUND

### Field

Apparatuses and methods consistent with exemplary embodiments relate to three-dimensional (3D) eyeglasses for viewing a 3D image in which a left eye image and a right eye image are displayed alternatively, and a method for driving the 3D eyeglasses and a system for providing a 3D image therewith.

### Description of the Related Art

3D stereoscopic image technology is applicable to various fields such as information communication, broadcasting, medicine, education & training, military, games, animation, virtual reality, computer-aided design (CAD), and industrial technology, and is regarded as a core base technology for the next generation of 3D stereoscopic multimedia information communication, which is used in all the aforementioned fields.

Generally, a stereoscopic sense that a person perceives occurs from a complex effect: the degree of change in thickness of a person's eye lens according to the location of an object being observed, the difference in the angle of the object as observed from both eyes, the differences in location and shape of the object as observed from both eyes, the time difference due to a movement of the object, and various other psychological and memory effects.

In particular, binocular disparity, caused by an approximate 6-7 cm lateral distance between a person's left eye and right eye, can be regarded as the main cause of the stereoscopic sense. Due to binocular disparity, the person perceives the object at different angles, which makes the left eye and the right eye receive different images, and when these two images are transmitted to the person's brain through the retinas, the brain can perceive the original three-dimensional stereoscopic image by combining the two pieces of information exactly.

There are two types of stereoscopic image display apparatuses: eyeglasses-type apparatuses which use special eyeglasses, and non-eyeglasses-type apparatuses which do not use such special eyeglasses. An eyeglasses-type apparatus may adopt a color filtering method which separately selects images by filtering mutually complementary colors, a polarized filtering method which separates the images received by a left eye from those received by a right eye using a light-shading effect caused by a combination of polarized light elements meeting at right angles, or a shutter eyeglasses method which enables a person to perceive a stereoscopic sense by alternately blocking a left eye and a right eye in response to a sync signal which projects a left image signal and a right image signal to a screen.

In order to view a 3D image which uses an eyeglasses-type apparatus, a user has to wear 3D eyeglasses. However, since a user does not always want to view a 3D image, the 3D eyeglasses should be driven and a 3D image should be displayed only when the user wears the 3D eyeglasses. However, in the past, the user had to turn a switch of the 3D eyeglasses on or off directly, in order to drive or stop driving the 3D eyeglasses, which was inconvenient. In addition, since the 3D eyeglasses were driven even when the user was not viewing a 3D image, the batteries of the 3D eyeglasses would discharge, which also caused inconvenience. Therefore, there is a need to seek methods for driving 3D eyeglasses which enable a user to view a 3D image with more convenience.

### SUMMARY

Exemplary embodiments provide 3D eyeglasses which detect whether a user is wearing the 3D eyeglasses and which provide power when it is detected that the user is wearing the 3D eyeglasses, and a method for driving the 3D eyeglasses and system for providing a 3D image therewith.

According to an aspect of an exemplary embodiment, there is provided 3D eyeglasses used with a 3D display apparatus, the 3D eyeglasses including: a power unit which supplies power to the 3D eyeglasses; a sensing unit which detects whether or not a user is wearing the 3D eyeglasses; and a controlling unit which controls the power unit to supply power, when the sensing unit detects that the user is wearing the 3D eyeglasses.

The sensing unit may include a button which is located at a temple of the 3D eyeglasses and which detects that the user is wearing the 3D eyeglasses when the button is pressed.

The sensing unit may include at least one of a temperature sensor, a pressure sensor, an illumination sensor, and an electromagnetic sensor.

The sensing unit may be located at at least one of a nose pad and a temple of the 3D eyeglasses.

The controlling unit may control the power unit not to supply power when the sensing unit detects that the user is not wearing the 3D eyeglasses.

The 3D eyeglasses used with a 3D display apparatus may further include a transceiver which transmits a first signal to the 3D display apparatus, and the controlling unit may generate the first signal and control the first signal to be transmitted to the 3D display apparatus when the sensing unit detects that the user is wearing the 3D eyeglasses.

The first signal may be a signal which controls the 3D display apparatus to display an image which has been converted from a two dimensional (2D) image mode into a 3D image mode.

According to an aspect of another exemplary embodiment, there is provided a method for driving 3D eyeglasses used with a 3D display apparatus, the method including a sensing unit detecting whether or not a user is wearing the 3D eyeglasses; and supplying power to the 3D eyeglasses when it is detected by the sensing unit that the user is wearing the 3D eyeglasses.

The sensing unit may include a button which is located at a temple of the 3D eyeglasses, and the detecting may detect that the user is wearing the 3D eyeglasses when the button is pressed.

The sensing unit may include at least one of a temperature sensor, a pressure sensor, an illumination sensor, and an electromagnetic sensor.

The sensing unit may be located at at least one of a nose pad and the temples of the 3D eyeglasses.

The method for driving 3D eyeglasses used with a 3D display apparatus may further include shutting off power to the 3D eyeglasses when the sensing unit detects that the user is not wearing the 3D eyeglasses.

The method for driving 3D eyeglasses used with a 3D display apparatus may further include generating a first signal when the sensing unit detects that the user is wearing the 3D eyeglasses; and transmitting the first signal to the 3D display apparatus.

The first signal may be a signal which controls the 3D display apparatus to convert an image which is input in a 2D image mode into a 3D image mode and display the converted image.

According to an aspect of another exemplary embodiment, there is provided a 3D image providing system including 3D eyeglasses which include a controller and a sensor, where the controller controls so that power is supplied, a first signal is generated, and the generated first signal is transmitted, when the sensor detects that the user is wearing the 3D eyeglasses; and a display apparatus which displays an image in a 3D image mode when the first signal is received.

The sensor may include a button which is located at a temple of the 3D eyeglasses, and which detects that the user is wearing the 3D eyeglasses when the button is pressed.

According to an aspect of another exemplary embodiment, there is provided a a 3D image providing system including first 3D eyeglasses comprising a first controller and a first sensor, wherein the first controller controls to shut off power when the first sensor detects that a first user is not wearing the first 3D eyeglasses, generate a first signal, and transmit the generated first signal; second 3D eyeglasses comprising a second controller and a second sensor, wherein the second controller controls to shut off power when the second sensor detects that a second user is not wearing the second 3D eyeglasses, generate a second signal, and transmit the generated second signal; and a display apparatus which displays an image in a 3D image mode when the first signal and the second signal are received.

The first sensor may detect whether or not the user is wearing the 3D eyeglasses using at least one of a temperature sensor, a pressure sensor, illumination sensor and an electromagnetic sensor.

The first sensor may be located at at least one of the nose pad and the temples of the first 3D eyeglasses.

According to the present invention there is provided an apparatus and method as set forth in the appended claims. Other features of the invention will be apparent from the dependent claims, and the description which follows.

### BRIEF DESCRIPTION OF THE DRAWINGS

These and/or other aspects will become apparent and more readily appreciated from the following description of the embodiments, taken in conjunction with the accompanying drawings of which:
FIG. 1 is illustrates a 3D image providing system according to an exemplary embodiment;
FIG. 2 is a block diagram of a 3D TV, according to an exemplary embodiment;
FIG. 3 is a block diagram of 3D eyeglasses, according to an exemplary embodiment;
FIG. 4 illustrates 3D eyeglasses, according to an exemplary embodiment;
FIGs. 5A and 5B illustrate a method for detecting whether or not a user is wearing 3D eyeglasses in nose pads of the 3D eyeglasses;
FIGs. 6A to 6C illustrate a method for detecting whether or not a user is wearing 3D eyeglasses in temples of the 3D eyeglasses;
FIG. 7 is a flowchart for explaining a method for driving 3D eyeglasses in detail, according to an exemplary embodiment; and
FIG. 8 illustrates a 3D image providing system which includes a plurality of 3D eyeglasses, according to an exemplary embodiment.

### DETAILED DESCRIPTION OF THE EXEMPLARY EMBODIMENTS

Certain exemplary embodiments are described in greater detail with reference to the accompanying drawings.

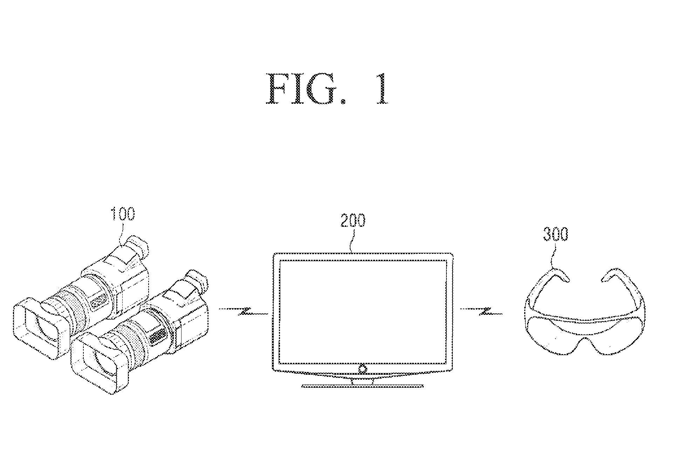

FIG. 1 is illustrates a 3D image providing system according to an exemplary embodiment. As illustrated, the 3D image providing system consists of a camera 100 which generates a 3D image, a 3D TV 200 which displays the 3D image on a screen, and 3D eyeglasses 300 for viewing the 3D image.

The camera 100 is a type of photographing apparatus for generating a 3D image. The camera 100 generates a left eye image photographed with the purpose of being provided to a left eye of a user, and a right eye image photographed with the purpose of being provided to a right eye of the user. That is, a 3D image consists of a left eye image and a right eye image, and as the left eye image and the right eye image are provided to the user alternatively, a stereoscopic sense due to binocular disparity can be perceived.

To this end, the camera 100 consists of a left eye camera for generating a left eye image and a right eye camera for generating a right eye image, and a distance between the left eye camera and the right eye camera is determined based on a distance between two eyes of a user.

The camera 100 transmits the photographed left eye image and the right eye image to the 3D TV 200. The left eye image and the right eye image may be transmitted in a frame format in which each frame contains only one of the left eye image and the right eye image or in a frame format in which each frame contains both the left eye image and the right eye image.

There are various kinds of formats for transmitting a 3D image to the 3D TV 200: a frame sequence format, a top-bottom format, a side by side format, a horizontal interleave format, a vertical interleave format, and a checker board format, for example.

The camera 100 preselects one of the above-mentioned formats or another format, and generates a 3D image and transmits the 3D image to the 3D TV 200 according to the preselected format.

The 3D TV 200 is a type of display apparatus, which receives a 3D image directly from a photographing apparatus such as the camera 100, or from a broadcasting station where the 3D image has been transmitted to for editing/processing, and then processes the 3D image received from either the camera 100 or the broadcasting station, and displays it on a screen. In particular, the 3D TV 200 processes the left eye image and the right eye image taking into account the format of the 3D image, and enables the processed left eye image and the right eye image to be displayed alternately in a timesharing manner.

The 3D TV 200 also generates a sync signal synchronized with the timing when the left eye image and the right eye image are displayed alternately in a timesharing manner and transmits the generated sync signal to the 3D eyeglasses 300.

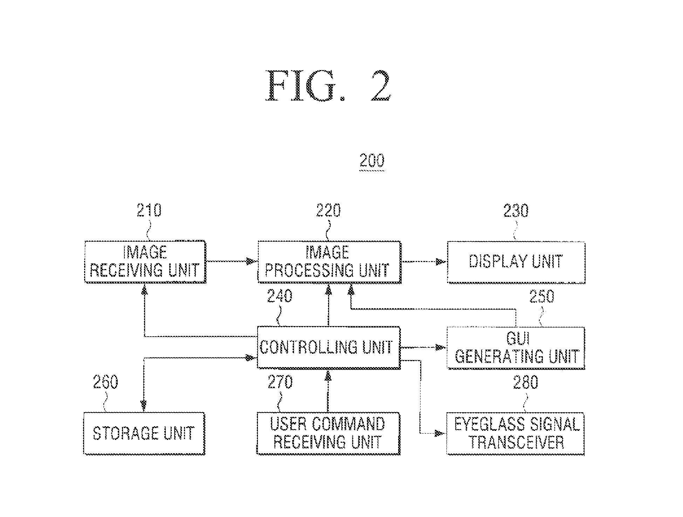

A configuration of such a 3D TV 200 will now be explained in more detail with reference to FIG. 2. FIG. 2 is a block diagram of a 3D TV 200 according to an exemplary embodiment.

As illustrated, a 3D TV 200 according to an exemplary embodiment includes an image receiving unit 210, an image processing unit 220, a display unit 230, a controlling unit 240, a Graphic User Interface (GUI) generating unit 250, a storage unit 260, a user command receiving unit 270, and an eyeglass signal transceiver 280.

The image receiving unit 210 receives a broadcast transmitted wirelessly or via cables from a broadcasting station or a satellite, and demodulates the broadcast. The image receiving unit 210 may be connected to an external device such as the camera 100, and receive the 3D image from it. The external device may be connected wirelessly or via cables through an interface such as S-Video, Component, Composite, D-Sub, DVI, and HDMI.

As aforementioned, the 3D image is an image in the format of at least one frame consisting of either or both of the left eye image and the right eye image.

In addition, the 3D image transmitted to the image receiving unit 210 may be in any one of various formats, for example, one of the general frame sequence format, top-bottom format, side by side format, horizontal interleave format, vertical interleave format, or checker board format.

The image receiving unit 210 transmits the received 3D image to the image processing unit 220.

The image processing unit 220 performs operations of processing signals and adding GUIs such as video decoding, format analyzing, and video scaling on the received 3D image.

In particular, the image processing unit 220 generates a left eye image and a right eye image, each of which may fit the size of a 1920 x 1080 screen, using the format of the 3D image transmitted to the image receiving unit 210.

That is, in the case when the format of the 3D image is any one of the top-bottom format, the side-by-side format , the horizontal interleaved format , the vertical interleaved format , or the checker board format , the image processing unit 220 extracts the left eye image portion and the right eye image portion from each image frame, and expansively scales or interpolates the extracted left eye image and the right eye image, thereby generating a left eye image and a right eye image to be provided to the user.

In addition, in a case when the format of the 3D image is the general frame sequence format , the image processing unit 220 extracts the left eye image or the right eye image from each frame and makes preparations to provide them to the user.

The image processing unit 220 also enables a GUI received from a GUI generating unit 250, which will be explained below, to be added to either of or both the left eye image and right eye image.

The image processing unit 220 transmits the extracted left eye image and the right eye image alternately in a timesharing manner to the display unit 230. In other words, the image processing unit 220 transmits the left eye image and the right image to the display unit 230 in the following order: left eye image(L1) → right eye image (R1) → left eye image (L2) → right eye image (R2) → ....

The display unit 230 alternately outputs the left eye image and the right eye image transmitted from the image processing unit 220, and provides them to the user.

The GUI generating unit 250 generates a GUI to be shown on the display. The GUI generated by the GUI generating unit 250 is transmitted to the image processing unit 220 and added to either of or both the left eye image and the right eye image to be shown on the display.

When an operating signal generated in the 3D eyeglasses 300 is received, the GUI generating unit 250 may generate a GUI which displays a mode currently being displayed by the controlling unit 240, which will be explained below.

The storage unit 260 is storage medium in which various programs needed to operate the 3-Dimension TV 200 are stored. The storage unit 260 can be, but is not limited to, a memory or a Hard Disk Drive (HDD), etc..

The user command receiving unit 270 receives a user command from an input means such as a remote control and transmits it to the controlling unit 240.

The eyeglass signal transceiver 280 receives an operating signal from the 3D eyeglasses 300. Herein, the operating signal received from the 3D eyeglasses is the signal generated when the 3D eyeglasses 300 detect that the user is wearing the 3D eyeglasses 300.

Herein, whether or not the user is wearing the 3D eyeglasses 300 may be detected by a sensing unit attached to the 3D eyeglasses 300. More specifically, the 3D eyeglasses 300 may have various kinds of sensors or buttons on parts (for example: the nose pad or temples of the eyeglasses, etc.) that may or may not be physically contacted by the user. For instance, there are various kinds of sensors such as temperature sensors, pressure sensors, electromagnetic sensors, and illumination sensors which may be used.

To be more specific, if the 3D eyeglasses 300 have a temperature sensor, the 3D eyeglasses 300 would be able to detect whether or not a user is wearing the 3D eyeglasses 300 when a body temperature is detected. Furthermore, if the 3D eyeglasses 300 have a pressure sensor, the 3D eyeglasses 300 would be able to detect whether or not a user is wearing the 3D eyeglasses 300 when a pressure that is the same or above a certain pressure value is detected. In addition, if the 3D eyeglasses 300 have an electromagnetic sensor, the 3D eyeglasses 300 would be able to detect whether or not a user is wearing the 3D eyeglasses 300 when a change in electric charge is detected. Moreover, if the 3D eyeglasses 300 have an illumination sensor, the 3D eyeglasses 300 would be able to detect whether or not a user is wearing the 33D eyeglasses 300 when a change of the illumination ,which is the same or above a certain value, is detected.

In addition, if a sensor unit of the 3D eyeglasses 300 is a button located in the temples of the 3D eyeglasses 300, the 3D eyeglasses 300 would be able to detect that the user is wearing the 3D eyeglasses when the button located in the temples is pressed.

The controlling unit 240 controls the overall operations of the TV 200 according to the user command received from the user command receiving unit 270.

In particular, the controlling unit 240 controls the image receiving unit 210 and the image processing unit 220, so that the 3D image can be received, the received 3D image can be separated into the left eye image and the right eye image, and each of the separated left eye image and right eye image can be scaled or interpolated to fit the screen.

Furthermore, the controlling unit 240 controls the eyeglass signal transceiver 280, so that a synchronized signal which has been synchronized with the output timing of the left eye image and the right eye image can be generated and transmitted.

In addition, when an operating signal is received from the 3D eyeglasses 300, the controlling unit 240 controls so that the 3D image currently being displayed in a 2D image mode can be displayed in a 3D image mode. Furthermore, when an operating signal is received from the 3D eyeglasses 300, the controlling unit 240 may control so that a GUI displays that the currently displayed mode is a 3D mode.

In addition, when a stop signal is received from the 3D eyeglasses 300, the controlling unit 240 controls so that the 3D image currently being displayed in a 3D image mode can be displayed in a 2D image mode. Furthermore, when a stop signal is received from the 3D eyeglasses 300, the controlling unit 240 may control so that a GUI displays that the currently displayed mode is a 2D mode.

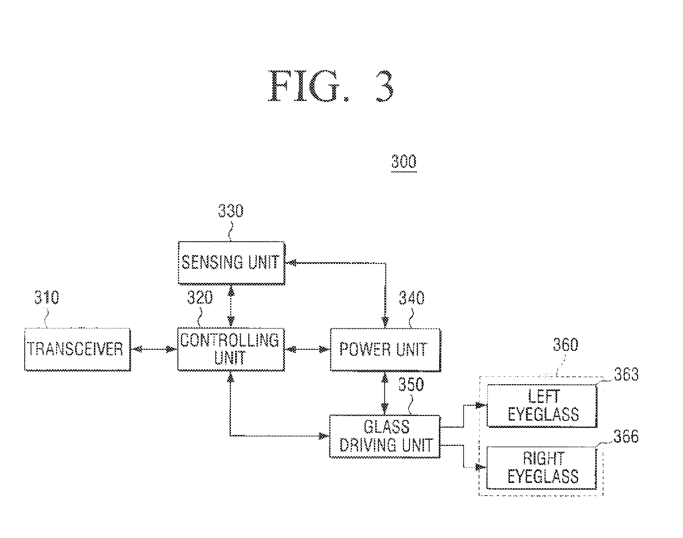

The 3D eyeglasses 300 open and close the left eyeglass and the right eyeglass alternately according to the sync signal received from the 3D TV 200, enabling the user to watch the left eye image and the right eye image through the left eye and the right eye, respectively. The configuration of the 3D eyeglasses 300 will now be explained in more detail with reference to FIG. 3.

FIG. 3 is a block diagram of the 3D eyeglasses 300 according to the exemplary embodiment. As illustrated in FIG. 3, the 3D eyeglasses 300 comprises a transceiver 310, a controlling unit 320, a sensing unit 330, a power unit 340, a glass driving unit 350, and a glass unit 360.

The transceiver 310 receives a sync signal regarding the 3D image from the eyeglass signal transceiver 280 of the 3D TV 200 connected wirelessly or via cables. Especially, the eyeglass signal transceiver 280 emits the sync signal using an infrared ray having a straightness characteristic, and the transceiver 310 receives the sync signal from the emitted infrared ray. For example, the sync signal which is transmitted from the eyeglass signal transceiver 280 to the transceiver 310 is an infrared ray signal having a frequency of 60Hz.

In addition, the transceiver 310 transmits the operating signal to the 3D TV 200 by a control of the controlling unit 320 to be explained below. Herein, the operating signal refers to the signal which controls the 3D TV 200 so that the currently displayed mode which is a 2D image mode can be converted to a 3D image mode and be displayed. The operating signal is generated when the 3D eyeglasses 300 detect whether or not the user is wearing the 3D eyeglasses 300.

The sensing unit 330 detects whether or not the user is wearing the 3D eyeglasses. To be more specific, the sensing unit 330 may be any one of various kinds of sensors and buttons etc.. For instance, possible sensors include a temperature sensors, a pressure sensors, electromagnetic sensors, and an illumination sensors, etc..

More specifically, if the sensing unit 330 is a temperature sensor, the 3D eyeglasses 300 would be able to detect whether or not a user is wearing the 3D eyeglasses 300 when a body temperature is detected. Furthermore, if the sensing unit 330 is a pressure sensor, the 3D eyeglasses 300 would be able to detect whether or not a user is wearing the 3D eyeglasses 300 when a pressure that is the same or above a certain pressure value is detected. In addition, if the sensing unit 330 is an electromagnetic sensor, the 3D eyeglasses 300 would be able to detect whether or not a user is wearing the 3D eyeglasses 300 when a change in an electric charge is detected in the area physically contacted by the user. Moreover, if the sensing unit 330 is an illumination sensor, the 3D eyeglasses 300 would be able to detect whether or not a user is wearing the 3D eyeglasses 300 when a change of the illumination which is the same or above a certain value is detected.

In addition, the sensing unit 330 of the 3D eyeglasses 300 may be a button located in the temples of the 3D eyeglasses 300. Herein, the 3D eyeglasses 300 would be able to detect that the user is wearing the 3D eyeglasses 300 when the button located in the temples is pressed.

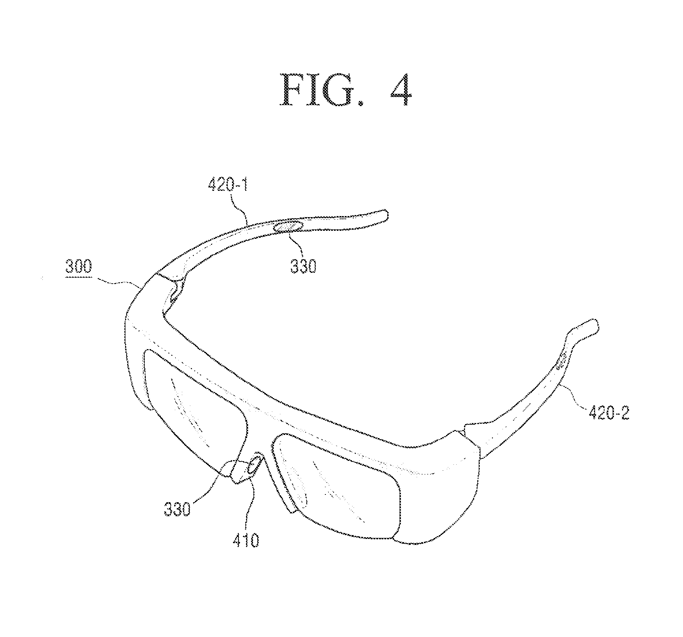

Hereinafter, the location of the sensing unit 330 will be explained in more detail with reference to FIG. 4.

The sensing unit 330 of the 3D eyeglasses 300 may be located in a nose pad 410 or the temples 420-1, 420-2, of the eyeglasses, as illustrated in FIG. 4. Although FIG. 4 illustrates that the sensing unit 330 is located in the eyeglasses' nose pad 410 or the eyeglasses' temples 420-1, 420-2, this is only an exemplary embodiment, and the sensing unit 330 may be located in one or more other areas which may or may not physically contact the user when in use.

In addition, the 3D eyeglasses 300 may include one of the above sensors, but may also include a plurality of sensors for more exact sensing.

As illustrated in FIG. 3, the power unit 340 supplies power to the 3D eyeglasses 300 by the control of the controlling unit 320 according to the sensing result of the sensing unit 330. More specifically, when the sensing unit 330 has detected that the user is wearing the 3D eyeglasses through the aforementioned method, the power unit 340 is controlled to supply power to the 3D eyeglasses 300. However, when the sensing unit 330 has detected that the user is not wearing the 3D eyeglasses, the power unit 340 is controlled to stop supplying power to the 3D eyeglasses 300.

The glass driving unit 350 generates a driving signal based on the control signal received from the controlling unit 320 explained below. Particularly, the glass unit 360 to be explained below consists of a left eyeglass 363 and a right eyeglass 366, and thus the glass driving unit 350 generates a left eyeglass driving signal for driving the left eyeglass 363 and a right eyeglass driving signal for driving the right eyeglass 366, and transmits the generated left eyeglass driving signal to the left eyeglass 363 and the right eyeglass driving signal to the right eyeglass 366.

As aforementioned, the glass unit 360 consists of the left eyeglass 363 and the right eyeglass 366, and opens and closes each glass according to the driving signal received from the glass driving unit 350.

The controlling unit 320 controls the overall operations of the 3D eyeglasses 300. Especially, the controlling unit 320 generates a control signal based on the output signal received from the transceiver 310, and transmits the generated control signal to the glass driving unit 330, controlling the glass driving unit 330.

Furthermore, when the sensing unit 330 detects that the user is wearing the 3D eyeglasses 300, the controlling unit 320 generates an operating signal to be transmitted to the 3D TV 200. Herein, the operating signal refers to the signal which controls the 3D TV 200 so that the currently displayed mode can be converted from the 2D image mode to the 3D image mode and displayed. When the operating signal is generated, the controlling unit 320 controls the transceiver 310 to transmit the generated operating signal to the 3D TV 200.

In addition, when the sensing unit 330 detects that the user is not wearing the 3D eyeglasses, the controlling unit 320 generates a stop signal to be transmitted to the 3D TV 200. Herein, the stop signal refers to the signal which controls the 3D TV 200 so that the currently displayed mode can be converted from the 3D image mode to the 2D image mode and displayed. When the stop signal is generated, the controlling unit 320 controls the transceiver 310 to transmit the generated stop signal to the 3D TV 200.

Controlling the power of the 3D eyeglasses 300 by the aforementioned method increases user convenience when viewing 3D images. In addition, the aforementioned method also prevents unnecessary consumption of the battery, as the 3D eyeglasses 300 are turned off when the user is not using them.

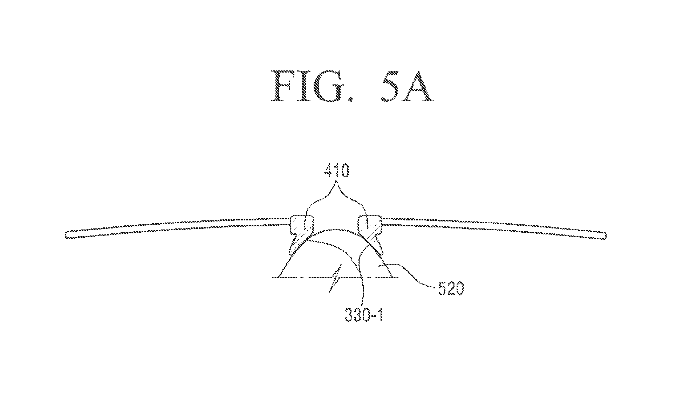

A method of detecting whether or not the user is wearing the 3D eyeglasses 300 is explained below with reference to FIGS. 5A to 6C.

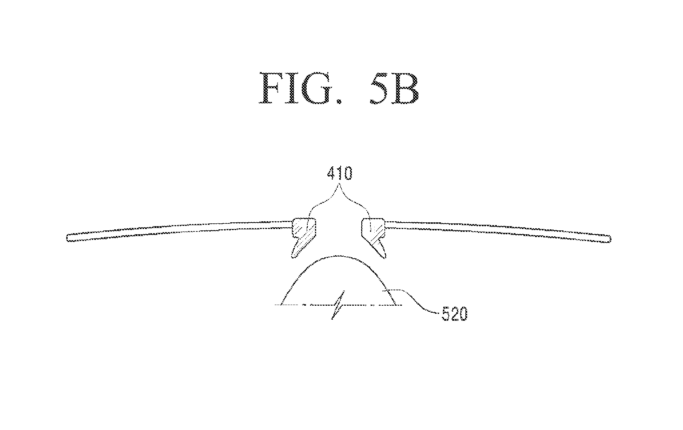

FIGs. 5A and 5B are figures illustrating the method of detecting whether or not the user is wearing the 3D eyeglasses 300 in the nose pad 410 of the 3D eyeglasses 300 according to an exemplary embodiment. Particularly, in FIGs. 5A and 5B, the sensing unit 330 is located in the nose pad 410. Herein, the sensing unit 330 is a pressure sensor 330-1.

FIG. 5A illustrates when the user is wearing the 3D eyeglasses 300, whereas FIG. 5B illustrates when the user has taken off the 3D eyeglasses 300. As illustrated in FIG. 5A, when the nose pad 410 of the 3D eyeglasses contacts the nose 520 of the user, the sensing unit may detect that the user is wearing the 3D eyeglasses. More specifically, when a pressure which is the same or above a certain pressure value is applied to the pressure sensor 330-1 as the user wears the 3D eyeglasses 300, the 3D eyeglasses 300 detect that the user is wearing the 3D eyeglasses 300. On the other hand, when the nose pad 410 of the 3D eyeglasses is not in contact with the nose 520 of the user as illustrated in FIG. 5B, the sensing unit 330 detects that the user is not wearing the 3D eyeglasses 300. More specifically, when the user is not wearing the 3D eyeglasses 300, no pressure is applied to the pressure sensor 330-1, and thus the 3D eyeglasses 300 would detect that the user is not wearing the 3D eyeglasses 300.

In the aforementioned exemplary embodiment, the sensing unit 330 located in the nose pad 410 is a pressure sensor 330-1, but this is only an exemplary embodiment, and thus the sensing unit 330 can be substituted with another sensing device such as a temperature sensor, an illumination sensor, an electromagnetic sensor, or another type of sensor.

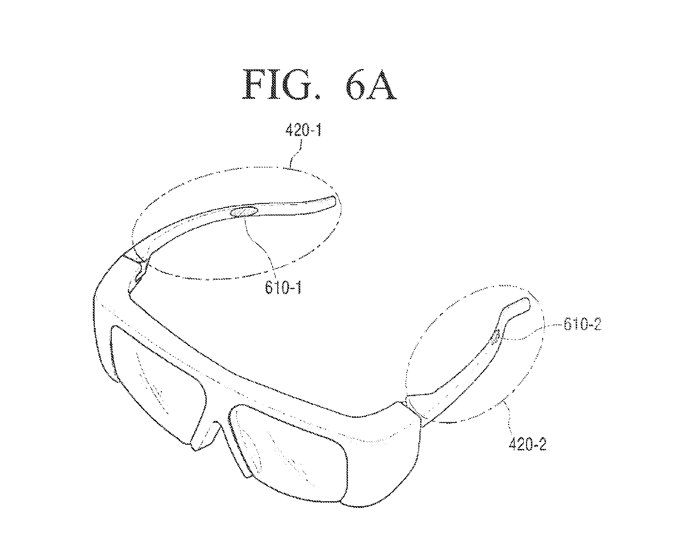

FIGs. 6A to 6C illustrate a method of detecting whether or not the user is wearing the 3D eyeglasses 300 in the temples of the 3-Dimension eyeglasses 300 according to an exemplary embodiment. Particularly, in FIGs. 6A to 6C, the sensing unit 330 is located in the temples 420-1, 420-2. Herein, the sensing unit 330 is buttons 610-1, 620-2.

FIG. 6A is a figure illustrating the location of the buttons 610-1, 620-2, the sensing unit 330, in the 3D eyeglasses 300. More specifically, as illustrated in FIG. 6A, the sensing unit 330 is located in the inner side of the temple 420, the area which physically contacts with the user.

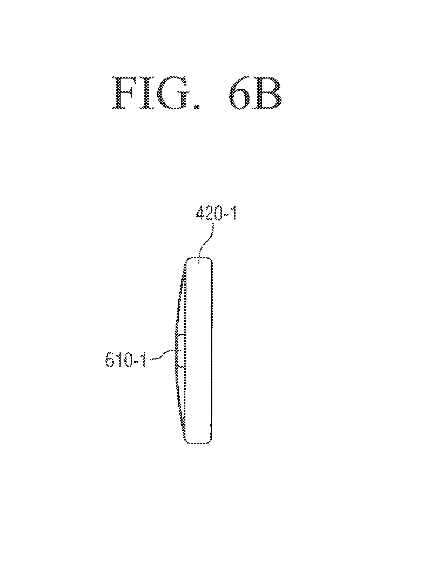

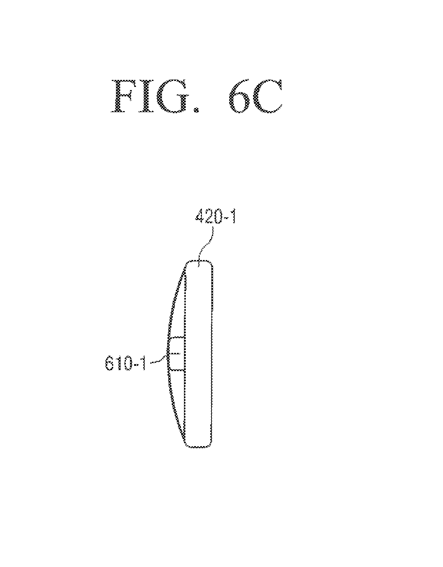

FIG. 6B is a cross-section of a temple when the user is wearing the 3D eyeglasses 300 and thus the button is pressed, whereas FIG. 6C is a cross-section of a temple when the user is not wearing the 3D eyeglasses 300 and thus the button is not pressed. As illustrated in FIG. 6B, when the temple 420-1 of the 3D eyeglasses 300 is physically contacted with the user's head, the button 610-1 will be depressed due to the contact. Therefore, the 3D eyeglasses 300 will be able to detect that the user is wearing the 3D eyeglasses 300. On the other hand, as illustrated in FIG. 6C, when the temple 420-1 of the 3D eyeglasses 300 is not physically contacted with the user's head, the button 610-1 will not be depressed. Therefore, the 3D eyeglasses 300 will be able to detect that the user is not wearing the 3D eyeglasses 300.

In the aforementioned exemplary embodiment, the sensing unit 330 located in temple 420-1 is a button 610-1, but this is only an exemplary embodiment, and thus the sensing unit 330 can be substituted with another sensing device such as a temperature sensor, an illumination sensor, an electromagnetic sensor, or another type of sensor.

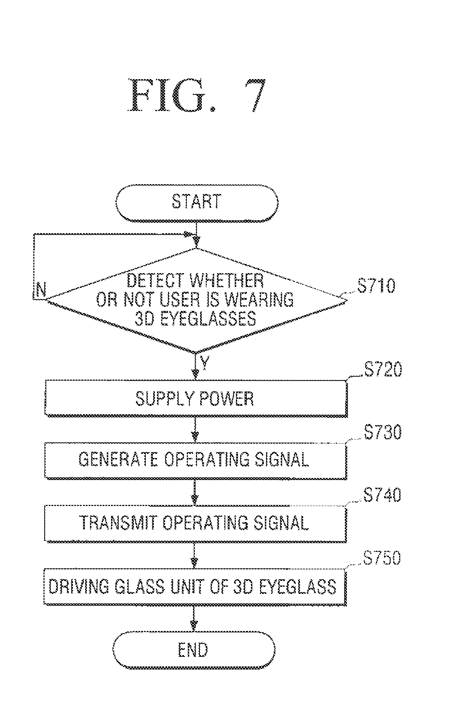

FIG. 7 is a flowchart which illustrates a method for driving the 3D eyeglasses 300 in detail, according to an exemplary embodiment.

3D eyeglasses 300 detects whether or not the user is wearing the 3-Dimension eyeglasses 300 through the sensing unit 330 (S710). Herein, as aforementioned, the method for detecting whether or not the user is wearing the 3D eyeglasses may be through various sensors and buttons.

When it is detected that the user is wearing the 3D eyeglasses (S710-Y), the controlling unit 320 of the 3D eyeglasses 300 controls so that power is supplied (S720). After the power is supplied, the controlling unit 320 of the 3D eyeglasses 300 generates an operating signal for transmitting to the 3D TV 200 (S730). Herein, the operating signal is the signal which controls the 3D TV 200 so that the currently displayed mode can be converted from the 2D image mode to the 3D image mode and displayed.

After the operating signal is generated, the 3D eyeglasses 300 transmit the generated operating signal to the 3D TV 200 (S740). Herein, the operating signal may be an infrared ray type signal.

In addition, after the operating signal is generated and transmitted, the 3D eyeglasses 300 drive the glass unit 360 of the 3D eyeglasses 300 (S750).

As the power of the 3D eyeglasses 300 is controlled by the aforementioned method, it becomes unnecessary for the user to do anything other than put on the 3D eyeglasses 300 when viewing 3D images. Thus, user convenience increases when viewing the 3D images. In addition, unnecessary consumption of the battery can be prevented, as the 3D eyeglasses are turned off when the user is not using them.

Meanwhile, in the aforementioned exemplary embodiment, the 3D display apparatus is a 3D TV 200, but this is only an exemplary embodiment, and thus the 3D display apparatus may be any device, such as a 3D monitor 3D projector, or the like, as long as it can display 3D images.

Hereinafter, a method for driving 3D eyeglasses in a 3D image providing system including a plurality of 3D eyeglasses will be explained below.

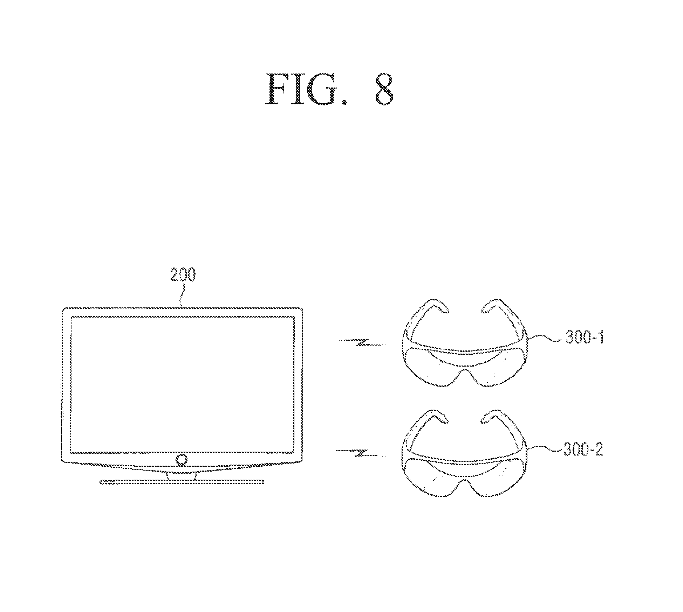

FIG. 8 illustrates a 3D image providing system including a plurality of 3D eyeglasses according to an exemplary embodiment. As illustrated in FIG. 8, the 3D image providing system includes a 3D TV 200 and two pairs of 3D eyeglasses 300-1, 300-2.

In the first 3D eyeglasses 300-1, whether or not the user is wearing the 3D eyeglasses is detected by the sensing unit 330. Based on the result of the detection, the first 3D eyeglasses 300-1 determine whether or not to supply power and generate a signal in the first 3D eyeglasses 300-1.

More specifically, when the first 3D eyeglasses 300-1 have detected whether the user is wearing the first 3D eyeglasses 300-1, the first 3D eyeglasses 300-1 control the power unit 340 so that power can be supplied to each configuration of the first 3D eyeglasses 300-1. In addition, when the sensing unit 330 of the first 3D eyeglasses 300-1 has detected that the user is wearing the first 3D eyeglasses 300-1, the controlling unit 320 of the first 3D eyeglasses 300-1 generates an operating signal to be transmitted to the 3D TV 200. When the operating signal is generated, the controlling unit 320 of the first 3D eyeglasses 300-1 controls the transceiver 310 of the first 3D eyeglasses 300-1 so that the generated operating signal can be transmitted to the 3D TV 200.

In addition, when the sensing unit 330 of the first 3D eyeglasses 300-1 has detected that the user is not wearing the first 3D eyeglasses 300-1, the first 3D eyeglasses 300-1 controls the power unit 340 so that power is not supplied to each configuration of the first 3D eyeglasses 300-1. In addition, when the sensing unit 330 of the first 3D eyeglasses 300-1 has detected that the user is not wearing the first 3D eyeglasses 300-1, the controlling unit 320 of the first 3D eyeglasses 300-1 generates a stop signal to be transmitted to the 3D TV 200. When the stop signal is generated, the controlling unit 320 of the first 3D eyeglasses 300-1 controls the transceiver 310 of the first 3D eyeglasses 300-1 so that the generated stop signal can be transmitted to the 3D TV 200.

The second 3D eyeglasses 300-2 determine whether or not to supply power and generate a signal in the second 3D eyeglasses 300-2 based on the result of the detection as in the same manner as the first 3D eyeglasses 300-1.

When the 3D TV 200 receives an operating signal from the first 3D eyeglasses 300-1 and the second eyeglasses 300-2, the controlling unit 240 of the 3D TV 200 controls so that the 3D image which is currently being displayed in the 2D image mode can be displayed in the 3D image mode. Herein, it is also possible to set the system so that the image mode can be converted even when an operating signal from only one of the first 3D eyeglasses 300-1 and the second 3D eyeglasses 300-2 is received.

In addition, when the 3D TV 200 receives a stop signal from the first 3D eyeglasses 300-1 and the second 3D eyeglasses 300-2, the controlling unit 240 of the 3D TV 200 controls so that the 3D image which is currently being displayed in the 3D image mode can be displayed in the 2D image mode. Herein, it is also possible to set the system so that the image mode can be converted even when a stop signal from only one of the first 3D eyeglasses 300-1 and the second 3D eyeglasses 300-2 is received.

The 3D image providing system including two 3D eyeglasses is explained above, but this is only an exemplary embodiment. It is obviously also possible to apply the technological characteristics of the present disclosure to a 3D image providing system including at least three 3D eyeglasses.

As aforementioned, according to the present disclosure, automatically detecting whether the user is wearing the 3D eyeglasses and then driving the 3D eyeglasses increases user convenience when viewing 3D images. In addition, unnecessary consumption of the battery can be prevented, as the 3D eyeglasses are turned off when the user is not using them.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Three-dimensional (3D) eyeglasses used with a 3D display apparatus, the 3D eyeglasses comprising:
a power unit which supplies power to the 3D eyeglasses;
a sensing unit which detects whether or not a user is wearing the 3D eyeglasses; and
a controlling unit which controls the power unit to supply power, when the sensing unit detects that the user is wearing the 3D eyeglasses.

2. The 3D eyeglasses used with a 3D display apparatus as claimed in claim 1, wherein the sensing unit comprises a button which is located in a temple of the 3D eyeglasses, and which detects that the user is wearing the 3D eyeglasses when the button is pressed.

3. The 3D eyeglasses used with a 3D display apparatus as claimed in claim 1 or claim 2, wherein the sensing unit comprises at least one of a temperature sensor, a pressure sensor, an illumination sensor, and an electromagnetic sensor.

4. The 3D eyeglasses used with a 3D display apparatus as claimed in claim 3, wherein the sensing unit is located in at least one of a nose pad and the temples of the 3-Dimension eyeglasses.

5. The 3D eyeglasses used with a 3D display apparatus as claimed in any one of claims 1 to 4, wherein the controlling unit controls the power unit not to supply power when the sensing unit detects that the user is not wearing the 3D eyeglasses.

6. The 3D eyeglasses used with a 3D display apparatus as claimed in any one of claims 1 to 5, further comprising a transceiver which transmits a first signal to the 3D display apparatus, and
wherein the controlling unit generates a first signal and controls the first signal to be transmitted to the 3D display apparatus when the sensing unit detects that the user is wearing the 3D eyeglasses.

7. The 3D eyeglasses used with a 3D display apparatus as claimed in claim 6, wherein the first signal is a signal which controls the 3D display apparatus to display an image which has been converted from a 2D image mode into a 3D image mode and has been input.

8. A method for driving three-dimensional (3D) eyeglasses used with a 3D display apparatus, the method comprising:
detecting whether a user is wearing the 3D eyeglasses by a sensing unit; and
supplying power to the 3D eyeglasses when it is detected by the sensing unit that the user is wearing the 3D eyeglasses.

9. The method for driving 3D eyeglasses used with a 3D display apparatus as claimed in claim 8, wherein the sensing unit comprises a button which is located in a temple of the 3D eyeglasses, and
the detecting detects that the user is wearing the 3D eyeglasses when the button is pressed.

10. The method for driving 3D eyeglasses used with a 3D display apparatus as claimed in claim 8 or claim 9, wherein the detecting detects whether or not the user is wearing the 3D eyeglasses using at least one of a temperature sensor, a pressure sensor, an illumination sensor, and an electromagnetic sensor.

11. The method for driving 3D eyeglasses used with a 3D display apparatus as claimed in claim 10, wherein the sensing unit is located in at least one of a nose pad and a temple of the 3D eyeglasses.

12. The method for driving 3D eyeglasses used with a 3D display apparatus as claimed in any one of claims 8 to 11, further comprising shutting off power to the 3D eyeglasses when the sensing unit detects that the user is not wearing the 3D eyeglasses.

13. The method for driving 3D eyeglasses used with a 3D display apparatus as claimed in any one of claims 8 to 12, further comprising:
generating the first signal when the sensing unit detects that the user is wearing the 3D eyeglasses; and
transmitting the first signal to the 3D display apparatus.

14. The method for driving 3D eyeglasses used with a 3D display apparatus as claimed in claim 13, wherein the first signal is a signal which controls the 3D display apparatus to convert an image which is input in a 2D image mode into a 3D image mode and displays the converted image.

15. A three-dimensional (3D) image providing system comprising:
3D eyeglasses which control so that power is supplied, a first signal is generated, and the generated first signal is transmitted, when it is detected that a user is wearing the 3D eyeglasses by a sensor; and
a display apparatus which changes an image being displayed in a 2D image mode into a 3D image mode when the first signal is received.
